# FASCICULE DE BREVET EUROPEEN

(11) **EP 2 217 497 B1**
(45) Date de publication et mention de la délivrance du brevet: **03.08.2011**
(21) Numéro de dépôt: 08861685.9
(22) Date de dépôt: 01.12.2008
(51) Int. Cl.: B64D 15/04

(54) **NACELLE D'AERONEF COMPRENANT DES MOYENS D'EVACUATION D'AIR CHAUD**
FLUGZEUGGONDEL MIT HEISSLUFTAUSSTOSSMITTELN
AIRCRAFT NACELLE INCLUDING HOT AIR DISCHARGE MEANS

(30) Priorité: 03.12.2007 FR 0759493
(43) Date de publication de la demande: 18.08.2010
(73) Titulaire: Airbus Opérations SAS, 31060 Toulouse (FR)
(72) Inventeur: PORTE, Alain, F-31770 Colomiers (FR); CHENE, Gilles, F-31100 Toulouse (FR); HORMIERE, Arnaud, F-31100 Toulouse (FR)
(74) Mandataire: Fantin, Laurent
(86) Numéro de dépôt international: PCT/FR2008/052164
(87) Numéro de publication internationale: WO 2009/077688

(56) Documents cités:
- GB-A- 1 210 202
- US-A- 3 889 903
- US-A- 3 933 327
- US-A- 4 154 256
- US-A- 4 738 416
- US-A- 5 088 277

## Description

La présente invention se rapporte à une nacelle d'aéronef comprenant des moyens d'évacuation de l'air chaud utilisé notamment pour le dégivrage de la lèvre de l'entrée d'air de ladite nacelle.

Pour limiter l'impact des nuisances sonores à proximité des aéroports, les normes internationales sont de plus en plus contraignantes en matière d'émissions sonores.

Des techniques ont été développées pour réduire le bruit émis par un aéronef, notamment en disposant, au niveau des parois des conduits des nacelles, des revêtements visant à absorber une partie de l'énergie sonore, notamment en utilisant le principe des résonateurs d'Helmholtz. De manière connue, ce revêtement acoustique comprend de l'extérieur vers l'intérieur une couche poreuse acoustiquement résistive, une structure alvéolaire et une couche réflectrice imperméable aux ondes sonores pour que le revêtement soit efficace. Pour l'instant, en raison de différentes contraintes, par exemple de mise en forme ou de compatibilité avec d'autres équipements, l'étendue des surfaces traitées est limitée. Ainsi , le revêtement est difficilement compatible avec les systèmes permettant d'éviter la formation et/ou l'accumulation de glace et/ou de givre qui sont nécessaires dans ces zones.

Ces systèmes sont divisés en deux grandes familles, les premiers appelés systèmes anti-givrants permettant de limiter la formation de la glace et/ou du givre (voir le document US4738416) les seconds appelés systèmes dégivrants limitant l'accumulation de la glace et/ou du givre et agissant une fois la glace et/ou le givre formé. Pour la suite de la description, on entend par système ou procédé de traitement du givre, un système ou un procédé anti-givrant ou un système ou un procédé dégivrant.

La présente invention se rapporte plus particulièrement à un procédé de traitement du givre consistant à utiliser de l'air chaud prélevé au niveau du moteur et refoulé au niveau de la paroi interne des bords d'attaque.

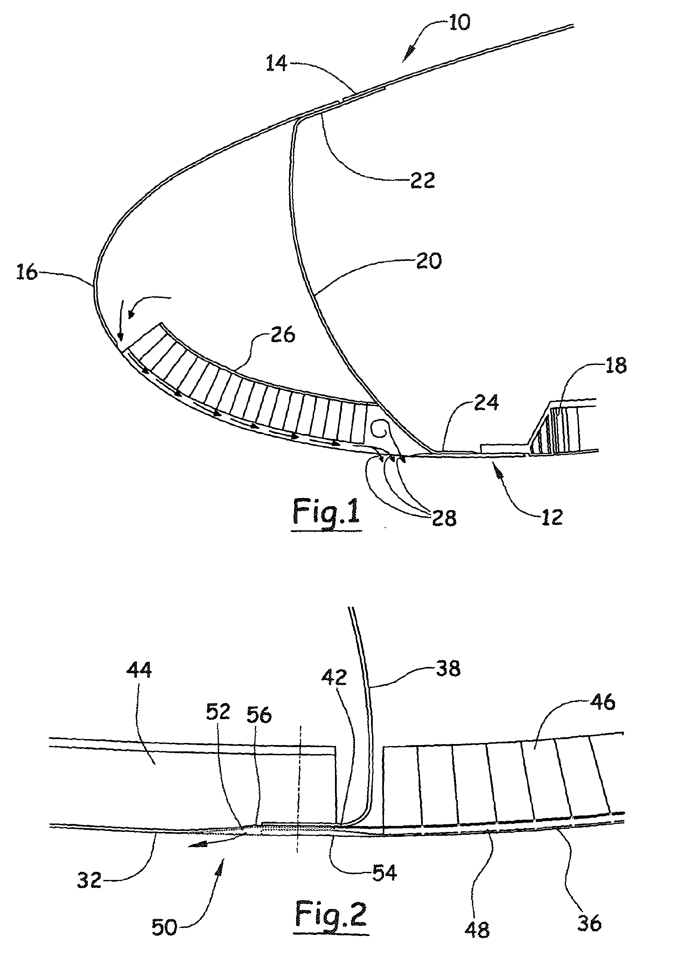

Selon un mode de réalisation illustré sur la figure 1, une nacelle 10 comprend au moins un conduit 12, une paroi périphérique 14, et à l'avant, une entrée d'air délimitée par une lèvre 16 qui relie le conduit 12 et la paroi périphérique 14.

De manière connue, le conduit 12 comporte un revêtement 18 pour le traitement acoustique comprenant de l'intérieur vers l'extérieur, une couche réflectrice, au moins une structure alvéolaire et au moins une structure acoustiquement résistive.

Pour renforcer la structure de la nacelle, un cadre avant 20 relie le conduit 12 et la paroi périphérique 14, la lèvre 16 étant solidarisée audit cadre avant 20. Selon un mode de réalisation, pour assurer la liaison entre le panneau formant la lèvre 16 et le panneau formant la paroi périphérique 14, les bords desdits panneaux sont plaqués puis fixés par tous moyens appropriés contre un rebord 22 du cadre avant 20.

Selon un mode de réalisation pour assurer la liaison entre le panneau formant la lèvre et un des panneaux délimitant le conduit 12, les bords desdits panneaux sont chevauchants et maintenus plaqués l'un contre l'autre par tous moyens appropriés. Comme illustré sur la figure 1, le cadre avant 20 comprend un rebord 24 contre lequel est plaquée et fixée par tous moyens appropriés la face intérieure du panneau de la lèvre.

La zone de jonction correspondant aux zones de chevauchement des panneaux constitue une surface non traitée sur le plan acoustique.

Avantageusement, un revêtement 26 pour le traitement acoustique recouvre au moins partiellement la surface de la lèvre.

En complément, des moyens sont prévus pour injecter de l'air chaud au niveau de la lèvre, l'air chaud provenant de la motorisation. Des moyens, par exemple des canaux, sont prévus au niveau de la surface intérieure de la paroi de la lèvre pour maintenir l'air chaud contre ladite paroi. Comme décrit dans la demande de brevet FR-070055586, ces canaux sont interposés entre la structure alvéolaire et la structure acoustiquement résistive du revêtement 26 pour le traitement acoustique.

Des moyens d'évacuation de l'air chaud sont prévus pour l'éjecter en dehors de la structure de la nacelle, dans le conduit 12, comme illustré sur la figure 1.

Selon un mode de réalisation, les moyens d'évacuation se présentent sous la forme de perforations ou de micro-perforations 28 ménagées au niveau de la paroi de la lèvre.

Selon un premier inconvénient de ce mode de réalisation, la surface de la zone occupée par les moyens d'évacuation non traitée sur le plan acoustique s'ajoute à la surface de la zone de jonction également non traitée, ce qui ne permet pas d'optimiser le traitement acoustique.

Selon un autre inconvénient, les micro-perforations dans la tôle métallique de la lèvre supportent peu la circulation traversante de l'air chaud qui tend à générer des phénomènes de microfissures réduisant considérablement Ici durée de vie de l'entrée d'air.

Enfin, selon une autre contrainte, la peau extérieure des revêtements pour le traitement acoustique étant en matériau composite sensible à la chaleur, les moyens d'évacuation doivent être positionnés de manière adéquate par rapport aux zones traitées sur le plan acoustique afin de limiter les risques de brûlures du composite.

Le document US-5088.277 décrit un autre mode de réalisation des moyens d'évacuation. Selon ce document, le cadre avant comprend en partie centrale une surface d'appui contre laquelle vient se plaquer la paroi formant la lèvre. Pour former les moyens d'évacuation, la paroi formant la lèvre comprend des renflements au niveau de la zone de jonction avec le cadre avant. Ainsi, au niveau des moyens d'évacuation, la paroi formant la lèvre est écartée du cadre avant pour laisser passer l'air chaud qui est évacué parallèlement à la surface du conduit. Selon ce mode de réalisation, la surface extérieure de la paroi formant le conduit vient dans le prolongement de la surface d'appui du cadre avant si bien qu'il existe un décalage entre la surface du conduit et la surface de la lèvre même dans les zones en dehors des renflements.

Ce mode de réalisation ne donne pas satisfaction pour les raisons suivantes :
Ces moyens d'évacuation génèrent d'importantes perturbations aérodynamiques sur le flux d'air circulant dans le conduit de la nacelle. En effet, les renflements constituent des formes en saillie par rapport aux surfaces du conduit et de la lèvre susceptibles de générer des perturbations aérodynamiques non admissibles pour la motorisation ou la soufflante disposées en aval.

Ces perturbations sont d'autant plus gênantes que le système de dégivrage a un fonctionnement ponctuel alors que les renflements perturbent continuellement le flux d'air circulant dans le conduit de la nacelle.

Selon un autre inconvénient, le décalage entre la surface du conduit et la surface de la lèvre conduit à un défaut de surface générant également des perturbations aérodynamiques.

Enfin, le flux d'air chaud étant évacué parallèlement à la surface du conduit, il risque de brûler les matériaux composites utilisés pour le traitement acoustique de la surface du conduit. Aussi, comme illustré dans le document US-5.088.277, le revêtement pour le traitement acoustique est écarté des moyens d'évacuation ce qui tend à réduire la surface traitée sur le plan acoustique.

Aussi, la présente invention vise à pallier aux inconvénients de l'art antérieur en proposant une nacelle incorporant un système d'évacuation de l'air chaud utilisé pour le dégivrage permettant d'optimiser le traitement acoustique en augmentant les surfaces traitées sans toutefois générer des perturbations aérodynamiques trop importantes.

A cet effet, l'invention a pour objet une nacelle d'aéronef comprenant des moyens d'évacuation permettant de faire communiquer l'intérieur avec l'extérieur de la nacelle et une zone de jonction entre deux éléments au niveau de laquelle les deux éléments se superposent, les deux éléments ayant chacun une surface formant la surface extérieure de la nacelle de part et d'autre de la zone de jonction, caractérisée en ce que lesdits moyens d'évacuation comprennent une cale en deux parties, une première partie intercalée entre les panneaux superposés qui comporte au moins un élément en saillie et/ou en creux permettant de ménager un passage entre lesdits panneaux afin de faire communiquer l'intérieur et l'extérieur de la nacelle et une seconde partie au droit d'un seul panneau, celui disposé à l'intérieur au niveau de la zone de jonction, afin de le protéger d'une température excessive.

Ainsi, le système d'évacuation d'air chaud permet de protéger le revêtement utilisé pour le traitement acoustique en limitant les risques de contact dudit revêtement avec un air trop chaud.

De préférence, les moyens d'évacuation ont des formes adaptées permettant d'éjecter l'air chaud selon une direction non parallèle à la surface extérieure de la nacelle afin de le mélanger avec les flux aérodynamiques circulant dans le conduit et de le refroidir. L'angle d'éjection de l'air chaud est déterminé de manière à obtenir un compromis entre le refroidissement dudit air chaud et les perturbations aérodynamiques produites par ledit flux d'air chaud sur les écoulements aérodynamiques circulant dans le conduit.

D'autres caractéristiques et avantages ressortiront de la description qui va suivre de l'invention, description donnée à titre d'exemple uniquement, en regard des dessins annexés sur lesquels :
- la figure 1 est une coupe de l'avant d'une nacelle selon l'art antérieur,
- la figure 2 est une coupe illustrant en détails le système d'évacuation d'air chaud selon l'invention,
- la figure 3 est une coupe de l'avant d'une nacelle montrant la position du cadre avant selon l'art antérieur et selon l'invention ainsi que les limites du dégivrage et des zones traitées sur le plan acoustique,
- la figure 4 est une vue en perspective illustrant une cale du système d'évacuation selon l'invention,
- la figure 5 est une vue en perspective de la cale de la figure 5 rapportée sur le panneau formant la lèvre,
- la figure 6 est une vue en perspective illustrant la cale de la figure 5 illustrant les orifices de sortie du système d'évacuation,
- la figure 7 est une vue en perspective d'une cale selon une autre variante,
- la figure 8 est une vue en perspective illustrant la cale de la figure 7 rapportée sur le panneau formant la lèvre,
- la figure 9 est une vue en perspective d'une cale selon une autre variante de l'invention,
- la figure 10 est une vue en perspective d'une cale selon une autre variante de l'invention,
- la figure 11 est une vue latérale de la cale de la figure 10,
- les figures 12 à 14 sont des coupes illustrant différentes variantes d'un système d'évacuation selon l'invention sans cale,
- la figure 15 est une coupe illustrant une variante de l'invention avec deux jonctions successives d'une part entre un panneau formant la lèvre et une cale et d'autre part entre ladite cale et un panneau formant le conduit, et
- les figures 16 et 17 sont des coupes illustrant des variantes du système d'évacuation selon l'invention avec des rondelles interposées entre deux panneaux au niveau de la zone de jonction.

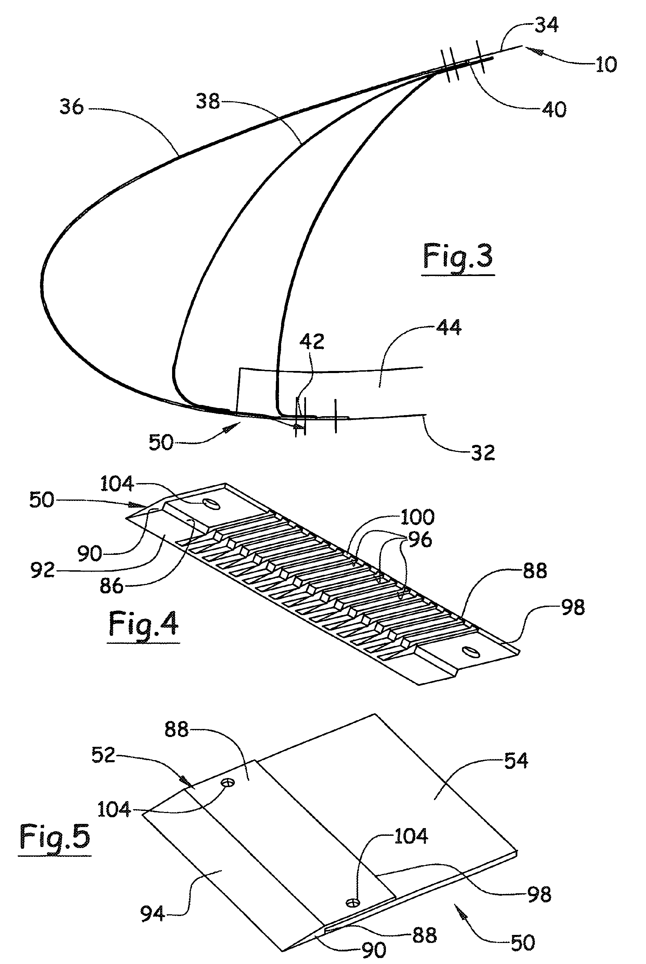

Sur les figures 2 et 3, on a représenté en 30 une nacelle comprenant un conduit 32, une paroi périphérique 34 ainsi qu'une lèvre 36 à l'avant reliant ledit conduit 32 et ladite paroi périphérique 34 et délimitant une entrée d'air. Les autres éléments de la nacelle ne sont pas décrits car ils sont connus de l'homme du métier.

Généralement, la paroi du conduit (ou de la lèvre) est obtenue par l'assemblage de plusieurs panneaux, de plusieurs plaques, de plusieurs peaux ou analogues. Pour la suite de la description, toutes ces formes de paroi seront désignées par le terme panneau.

La structure de la nacelle 30 comprend un cadre avant 38 reliant la paroi périphérique 34 et le conduit 32, et supportant la lèvre 36. Le cadre n'est pas plus détaillé car il est également connu de l'homme du métier.

Le cadre avant 38 comprend un premier bord disposé au niveau de la jonction de la paroi périphérique 34 et de la lèvre 36 et un second bord disposé au niveau de la jonction du conduit 32 et de la lèvre 36.

Au niveau du premier bord, le cadre avant 38 comprend une surface d'appui 40 au niveau de laquelle sont solidarisées la paroi périphérique 34 et/ou la lèvre 36. Selon un mode de réalisation, pour réduire l'influence sur la rainée, les panneaux de la surface périphérique et de la lèvre sont mis bout à bout et ne se chevauchent pas et sont tous les deux solidarisés à la surface d'appui 40.

Au niveau du second bord, le cadre avant 38 comprend une surface d'appui 42 au niveau de laquelle sont solidarisés le conduit 32 et/ou la lèvre 36.

Selon un mode de réalisation, la paroi de la lèvre 36 est solidarisée à la surface d'appui 42 et les extrémités des parois du conduit et de la lèvre en vis-à-vis se chevauchent et sont solidarisées par tous moyens appropriés. Pour réduire l'influence sur la traînée, le panneau du conduit (ou le panneau de la lèvre) comprend un décrochement dont la hauteur est adaptée à l'épaisseur du panneau de la lèvre (ou respectivement du panneau du conduit) afin que les surfaces aérodynamiques des deux panneaux de part et d'autre de la zone de chevauchement soient disposées dans le même plan.

De manière générale, on appelle une zone de jonction, une zone au niveau de laquelle deux éléments et plus particulièrement deux panneaux ou parties de panneaux sont superposés. La présente invention traite plus particulièrement des zones de jonction entre deux éléments comportant chacun une surface formant la surface extérieure de la nacelle de part et d'autre de la zone de jonction. Pour la suite de la description, on entend par intérieur de la nacelle la zone de la nacelle délimitée par la paroi périphérique, la lèvre et le conduit qui n'est pas en contact avec les flux aérodynamiques s'écoulant à l'extérieur de l'aéronef, l'extérieur de la nacelle correspondant à la zone complémentaire au niveau de laquelle circulent les flux aérodynamiques à savoir ceux en contact avec la surface extérieure de la paroi périphérique ou avec la surface extérieure du conduit à l'intérieur duquel s'écoule la veine d'air destinée à la turbomachine. Afin de réduire les nuisances sonores, le conduit 32 comprend un revêtement 44 pour le traitement acoustique, comportant de l'intérieur vers l'extérieur, une couche réflectrice, au moins une structure alvéolaire et au moins une structure acoustiquement résistive. Le revêtement pour le traitement acoustique n'est pas détaillé car il est également connu de l'homme du métier. Généralement, la structure acoustiquement résistive formant la surface aérodynamique est en matériau composite.

Pour améliorer le traitement acoustique, la lèvre peut comprendre également un revêtement acoustique 46.

Les zones de jonction d'une part entre le cadre avant et la lèvre, et d'autre part, entre la lèvre et le conduit sont des zones qui ne sont pas traitées sur le plan acoustique en raison du chevauchement desdits éléments.

La nacelle comprend également un système de traitement du givre au niveau de la lèvre 36.

La présente invention se rapporte plus particulièrement au nacelle intégrant un système de traitement du givre par air chaud. Dans ce cas, des moyens sont prévus pour insuffler de l'air chaud à l'intérieur de la lèvre afin que ce dernier en contact avec la surface intérieure de la lèvre empêche la formation de givre ou son accumulation au niveau de la surface extérieure de la lèvre.

Selon un mode de réalisation, l'air chaud est prélevé au niveau de la motorisation et des canalisations sont prévues pour l'acheminer dans l'espace délimité par le cadre avant et la lèvre. Ces différents éléments ne sont pas plus décrits car ils sont connus de l'homme du métier.

Avantageusement, des moyens sont prévus pour canaliser l'air chaud à proximité de la surface intérieure de la lèvre afin de renforcer l'efficacité du traitement du givre. Selon un mode de réalisation décrit dans la demande de brevet FR-070055586, des canaux 48 sont interposés entre la structure alvéolaire et la structure acoustiquement résistive du revêtement pour le traitement acoustique.

La nacelle comprend des moyens 50 permettant d'évacuer l'air chaud utilisé pour le traitement du givre à l'extérieur de ladite nacelle.

Selon l'invention, ces moyens 50 d'évacuation de l'air chaud sont prévus au niveau de la zone de jonction et sont intercalés entre deux éléments formant la zone de jonction. Selon l'invention, les moyens 50 d'évacuation de l'air chaud comprennent au moins une forme en saillie et/ou en creux disposée entre les deux éléments de la zone de jonction permettant de ménager un passage entre lesdits éléments afin de faire communiquer l'intérieur et l'extérieur de la nacelle et autoriser l'écoulement de l'air chaud depuis l'intérieur de la nacelle vers l'extérieur.

Le fait de prévoir les moyens d'évacuation au droit de la zone de jonction permet de réduire la surface non traitée et d'optimiser le traitement acoustique, la surface occupée par les moyens d'évacuation ne s'additionnant pas à la surface des zones de jonction.

Selon l'invention, l'élément disposé vers l'extérieur au niveau de la zone de jonction n'est pas déformé au niveau de la zone de jonction et ne comprend aucun renflement susceptible de générer des perturbations aérodynamiques. Selon les cas, soit l'épaisseur d'au moins un des deux éléments est réduite afin de former une ou plusieurs rainures au niveau de la surface de contact desdits deux éléments au niveau de la zone de jonction ou soit l'élément disposé vers l'intérieur au niveau de la zone de jonction est déformé vers l'intérieur de manière à permettre l'adjonction de forme en saillie au niveau des surfaces de contact ou d'au moins un élément rapporté.

Selon une caractéristique importante de l'invention, les moyens d'évacuation ont des formes adaptées permettant d'éjecter l'air chaud selon une direction non parallèle à la surface extérieure de la nacelle afin de le mélanger avec les flux aérodynamiques circulant dans le conduit et de le refroidir.

Avantageusement, la direction du flux d'air chaud éjecté forme un angle avec la surface extérieure variant de 5 à 60°. De préférence, l'angle est compris entre 5 et 30° pour obtenir un bon compromis entre le refroidissement de l'air chaud et les perturbations du flux aérodynamique circulant dans le conduit.

Selon un point important de l'invention, l'élément disposé à l'intérieur au niveau de la zone de jonction comprend un pan incliné entre la zone au niveau de laquelle la surface extérieure dudit élément est plaquée contre la surface intérieure de l'autre élément et la zone au niveau de laquelle la surface extérieure dudit élément forme la surface extérieure de la nacelle, ledit pan incliné permettant d'orienter le flux d'air chaud selon une direction non parallèle à la surface extérieure de la nacelle.

Selon un mode de réalisation, les moyens d'évacuation sont prévus sur toute la circonférence du conduit de la nacelle, ou selon une ou plusieurs portions de circonférence.

Selon un mode de réalisation amélioré, l'angle d'éjection de l'air chaud peut ne pas être constant le long de la circonférence. Ainsi, en fonction de la position des moyens d'évacuation sur la circonférence du conduit, l'angle d'éjection peut être optimisé.

Selon un mode de réalisation, les moyens d'évacuation comprennent au moins une cale 52 avec au moins un élément en saillie et/ou en creux disposé entre les deux éléments de la zone de jonction.

Selon un mode de réalisation préféré, la cale 52 comprend une portion intercalée entre le panneau 54 de la lèvre 36 et le panneau 56 du conduit 32, la surface d'appui 42 du cadre avant 38 étant disposée au droit de la zone de chevauchement desdits panneaux 54 et 56, comme illustré en détails sur la figure 2.

Cette configuration permet d'améliorer encore le traitement acoustique car les zones de jonction entre le cadre avant 38, la lèvre 36, le conduit 32 et les moyens 50 d'évacuation sont superposés, ce qui réduit encore les surfaces non traitées.

Cette configuration permet également d'optimiser le traitement du givre car les moyens 50 d'évacuation ne sont pas prévus de manière décalée vers l'avant (selon le sens de l'écoulement des flux aérodynamiques) par rapport au cadre avant 38. Selon un autre avantage, le système d'évacuation ne comprend plus de perforations ou de micro-perforations ce qui contribue à augmenter nettement sa durée de vie du fait qu'il n'y ait plus de risques possibles de déchirement sous la pression pneumatique.

Cette configuration a aussi pour avantage d'inciter l'air à s'évacuer par ce système d'évacuation ce qui améliore grandement le dégivrage de la lèvre. Comme illustré sur la figure 3, cette configuration permet éventuellement de décaler le cadre avant ce qui a pour avantage de l'incliner et donc de conférer à la lèvre une plus grande résistance au choc.

Avantageusement, les moyens 50 d'évacuation comprennent une cale 52 avec une première portion 58 intercalée entre les panneaux superposés et une seconde portion 60 au droit d'un seul panneau, celui disposé à l'intérieur au niveau de la zone de jonction, correspondant au panneau du conduit 32. Cette configuration permet de protéger le panneau formant le conduit 32 réalisé généralement au moins en partie en matériau composite.

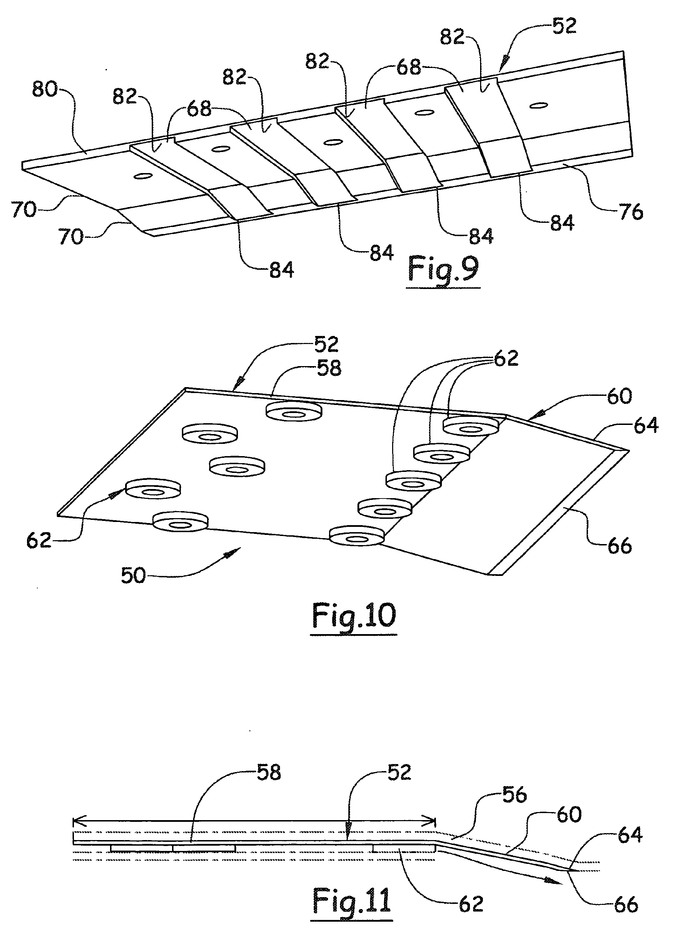

Selon une première variante illustrée sur les figures 10 et 11, les moyens 50 d'évacuation comprennent une cale 52 et des plots 62 prévus au niveau d'au moins une des faces de la cale, constituant des éléments en saillie autorisant le passage de l'air chaud depuis l'intérieur vers l'extérieur. Avantageusement, selon ce mode de réalisation, la cale 52 comprend une première portion 58 au niveau de laquelle sont rapportés les plots 62, intercalée entre les panneaux 54 et 56, et une seconde portion 60 en contact uniquement avec le panneau 56 du conduit 32. Les plots 62 sont disposés sur la face de la cale 52 en regard du panneau 54 de la lèvre afin que l'air chaud soit en contact seulement avec ledit panneau 54 afin de prolonger le traitement du givre et de protéger le panneau 56 du conduit intérieur réalisé généralement au moins en partie en matériau composite sensible à la chaleur.

Avantageusement, la seconde portion 60 est inclinée par rapport à la première partie 58 de manière à ce que l'extrémité libre 64 de la seconde portion 60 soit disposée au niveau de la surface aérodynamique des panneaux formant la lèvre et le conduit. De préférence, l'extrémité libre 64 comprend une forme en biseau de manière à obtenir un chant 66 dont la surface est disposée au niveau de la surface aérodynamique des panneaux formant la lèvre et le conduit 32.

La seconde portion 60 inclinée permet d'éjecter l'air chaud à l'extérieur de la nacelle avec une incidence de manière à ce qu'il se mélange avec les écoulements aérodynamiques circulant dans le conduit et qu'il se refroidisse.

Pour assurer le passage de l'air chaud, la première portion 58 s'étend sur toute la longueur L de la zone de superposition des panneaux 54 et 56.

Selon une autre variante illustrée sur les figures 4 à 9, les moyens 50 d'évacuation comprennent une plaque 52, appelée cale, avec au moins une rainure 68 sur au moins l'une des faces de la cale 52 permettant le passage de l'air chaud depuis l'intérieur de la nacelle vers l'extérieur.

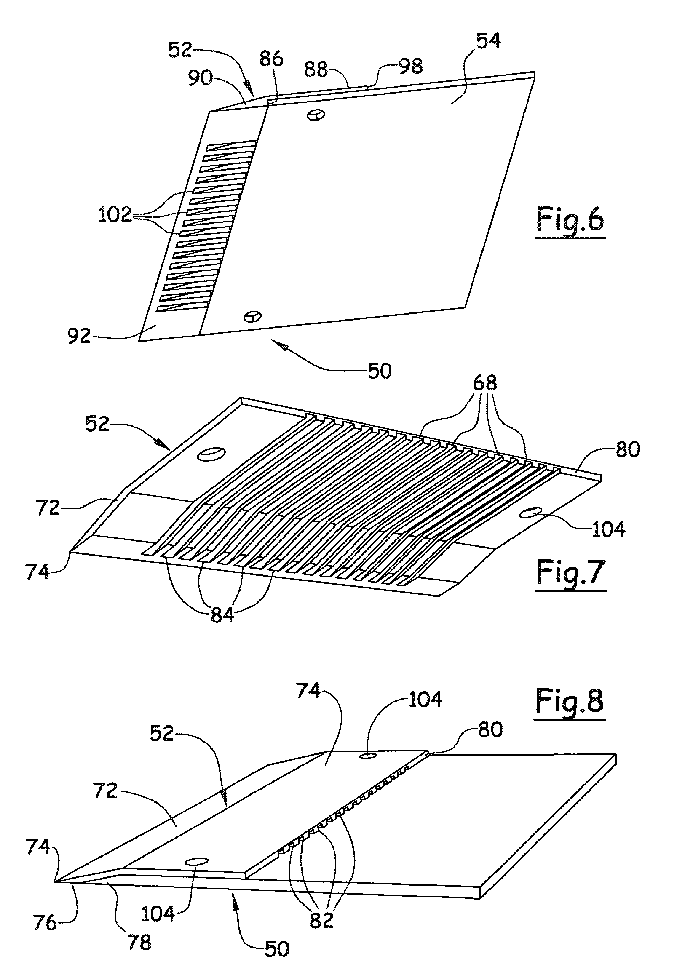

Selon un mode de réalisation illustré sur les figures 7 à 9, la plaque 52 comprend une première portion 70, intercalée entre les panneaux 54 et 56, s'étendant au moins sur la longueur de la zone de superposition desdits panneaux 54 et 56, et une seconde portion 72 inclinée par rapport à la première portion 70 de manière à ce que l'extrémité libre 74 de la seconde portion 72 soit disposée au niveau de la surface aérodynamique des panneaux 54 et 56 formant la lèvre et le conduit 32.

De préférence, l'extrémité libre 74 comprend une forme en biseau de manière à obtenir un chant 76 dont la surface est disposée au niveau de la surface aérodynamique des panneaux formant la lèvre et le conduit 32.

De préférence, le panneau 54 de la lèvre 36 comprend une extrémité 78 avec une forme en biseau de manière à obtenir un chant dont la surface est parallèle à la surface de la seconde portion 72 de la plaque 52.

La cale 52 comprend des rainures 68 seulement au niveau de la face en regard du panneau 54 de In lèvre 36. Ainsi, l'air chaud est canalisé entre la cale 52 et le panneau 54 de la lèvre 36, ce qui permet de protéger le panneau 56 du conduit 32 réalisé généralement au moins en partie en matériau composite sensible à la chaleur.

Les rainures 68 peuvent avoir une largeur plus ou moins importante, comme illustré sur les figures 7 et 9.

Les rainures 68 ont une hauteur inférieure à l'épaisseur de la plaque 52 et s'étendent depuis un premier chant 80 jusqu'au second chant 76.

Ainsi, les rainures 68 débouchent d'une part au niveau du chant 80 via des orifices 82 qui communiquent avec l'intérieur de la nacelle, et d'autre part, au niveau du chant 76 via des orifices 84 qui communiquent avec l'extérieur de la nacelle.

La seconde portion étant inclinée, le fond des rainures 68 est également incliné au niveau de ladite seconde partie, ce qui permet à l'air chaud d'être éjecté à l'extérieur de la nacelle avec une incidence de manière à ce qu'il se mélange avec les écoulements aérodynamiques circulant dans le conduit et qu'il se refroidisse. Selon un autre mode de réalisation illustré sur les figures 4 à 6, la plaque ou cale 52 comprend un épaulement 86, de hauteur sensiblement égale à l'épaisseur du panneau 54 de la lèvre, qui délimite une première portion 88 sous forme d'une plaque de faible épaisseur intercalée entre les deux panneaux 54 et 56, s'étendant au moins sur la longueur de la zone de superposition desdits panneaux 54 et 56, et une seconde portion 90 en forme de biseau avec un chant 92 dont la surface est disposée au niveau de la surface aérodynamique des panneaux formant la lèvre et le conduit intérieur et un pan incliné 94 contre lequel est plaqué le panneau 56 du conduit 32.

La cale 52 comprend des rainures 96 seulement au niveau de la face en regard du panneau 54 de la lèvre 36. Ainsi, l'air chaud est canalisé entre la cale 52 et le panneau 54 de la lèvre 36, ce qui permet de protéger le panneau 56 du conduit 32 réalisé généralement au moins en partie en matériau composite sensible à la chaleur.

Les rainures 96 peuvent avoir une largeur plus ou moins importante.

Les rainures 96 ont une hauteur inférieure à l'épaisseur de la plaque 52 et s'étendent depuis un premier chant 98 jusqu'au second chant 92.

Ainsi, les rainures 96 débouchent d'une part au niveau du chant 98 via des orifices 100 qui communiquent avec l'intérieur de la nacelle, et d'autre part, au niveau du chant 92 via des orifices 102 qui communiquent avec l'extérieur de la nacelle.

Comme précédemment, la seconde portion étant inclinée, le fond des rainures 68 est également incliné au niveau de ladite seconde partie, ce qui permet à l'air chaud d'être éjecté à l'extérieur de la nacelle avec une incidence de à ce qu'il se mélange avec les écoulements aérodynamiques circulant dans le conduit et qu'il se refroidisse.

Selon les différentes variantes, les plaques ou cales 52 sont maintenues en place par tous moyens appropriés. Selon un mode de réalisation, des orifices 104 peuvent être prévus pour permettre le passage de vis ou de rivets.

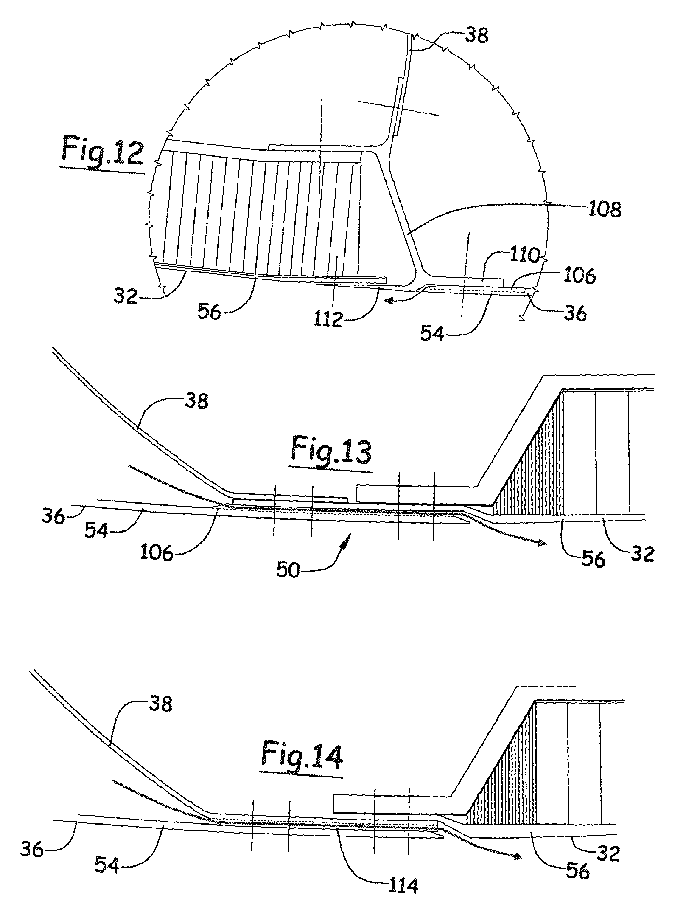

Sur les figures 12 et 13, les moyens 50 d'évacuation comprennent des formes en saillie et/ou en creux 106 réalisées directement sur le panneau 54 formant la lèvre 36. Selon un mode de réalisation, la surface intérieure du panneau 54 comprend des rainures 106 qui s'étendent sur toute la zone de jonction et qui communiquent à une première extrémité avec l'intérieur de la nacelle et à une seconde extrémité avec l'extérieur de la nacelle.

Selon un mode de réalisation illustré sur la figure 13, le panneau 56 se prolonge entre le cadre avant 38 et le panneau 54 formant la lèvre au niveau de la zone de jonction.

Selon un autre mode de réalisation illustré sur la figure 12, une pièce intermédiaire 108 est prévue pour relier le panneau 54 formant la lèvre, le panneau 56 formant le conduit 32 et le cadre avant 38. Cette pièce intermédiaire 108 comprend deux branches, une première branche 110 plaquée contre la surface intérieure du panneau 54 formant la lèvre 36 et une seconde branche 112 plaquée contre la surface extérieure du panneau 56 formant le conduit 32. Selon cette variante, les moyens 50 d'évacuation sont disposés entre le panneau 56 et la pièce intermédiaire 108. Selon les cas, les formes en saillie et/ou en creux peuvent être réalisées au niveau de la surface de la branche 110 de la pièce intermédiaire 108 en contact avec la surface intérieure du panneau 54 et/ou lesdites formes peuvent être réalisées au niveau de la surface intérieure du panneau 54 en contact avec la branche 110 de la pièce intermédiaire 108.

Selon une autre variante illustrée sur la figure 104, le cadre avant 38 se prolonge entre le panneau 54 formant la lèvre 36 et le panneau 56 formant le conduit 32. Selon un mode de réalisation, les moyens 50 d'évacuation comprennent des formes en saillie et/ou en creux 114 directement réalisées au niveau de la surface du cadre avant 38 en contact avec le panneau 54, lesdites formes en creux et/ou en saillie s'étendant sur une longueur suffisante pour faire communiquer l'intérieur de la nacelle, notamment la zone délimitée par le cadre avant et la lèvre, avec l'extérieur de la nacelle.

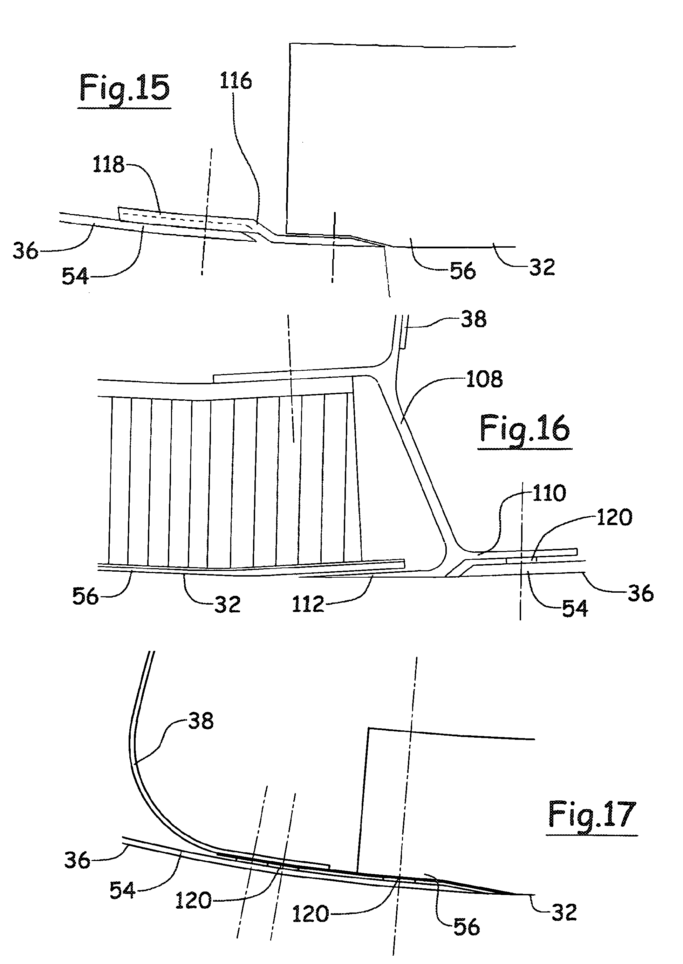

Sur la figure 15, on a représenté une autre variante, dans laquelle une tôle ou un plaque 116 assure la jonction entre le panneau 54 formant la lèvre 36 et le panneau 56 formant le conduit 32. Ainsi, ce mode de réalisation comprend une première zone de jonction entre le panneau 54 et la plaque 116 et une seconde zone de jonction entre la plaque 116 et le panneau 56. Selon un mode de réalisation, les moyens 50 d'évacuation comprennent des formes en saillie et/ou en creux 118 interposées entre le panneau 54 et la plaque 116. Selon les cas, les formes en saillie et/ou en creux 118 sont ménagées au niveau de la surface de la plaque 116 en contact avec le panneau 54, ou au niveau de la surface intérieure du panneau 54 en contact avec la plaque 116.

Selon d'autres modes de réalisation illustrés sur les figures 16 et 17, les moyens 50 d'évacuation comprennent une pluralité d'éléments 120 disposés entre les éléments d'une zone de jonction, notamment sous forme de rondelles.

Ainsi, comme illustré sur la figure 16, les rondelles 120 sont interposées entre la branche 110 d'une pièce intermédiaire 108 et le panneau 54 de la lèvre 36. Comme illustré sur la figure 17, les rondelles 120 sont interposées entre le cadre avant 38 et le panneau 54 formant la lèvre 36 et entre le panneau 56 formant le conduit 32 et le panneau 54 formant la lèvre 36.

Bien entendu, l'invention n'est pas limitée aux modes de réalisation illustrés sur les différentes figures, les formes en saillies et/ou en creux des moyens d'évacuation étant prévues directement sur au moins l'une des pièces formant la zone de jonction et/ou sur une pièce intercalaire, appelée cale, disposée entre les deux pièces formant la zone de jonction.

## Revendications

1. Nacelle d'aéronef comprenant des moyens (50) d'évacuation permettant de faire communiquer l'intérieur avec l'extérieur de la nacelle et une zone de jonction entre deux éléments (54, 56) au niveau de laquelle les deux éléments se superposent, les deux éléments ayant chacun une surface formant la surface extérieure de la nacelle de part et d'autre de la zone de jonction, **caractérisée en ce que** lesdits moyens (50) d'évacuation comprennent une cale (52) en deux parties, une première partie (58, 70, 88) intercalée entre les panneaux superposés qui comporte au moins un élément en saillie et/ou en creux permettant de ménager un passage entre lesdits panneaux afin de faire communiquer l'intérieur et l'extérieur de la nacelle et une seconde partie (60, 72, 90) au droit d'un seul panneau, celui disposé à l'intérieur au niveau de la zone de jonction, afin de le protéger d'une température excessive.

2. Nacelle d'aéronef selon la revendication 1, **caractérisée en ce que** la direction du flux d'air chaud éjecté forme un angle avec la surface extérieure variant de 5 à 30°, optimisé pour obtenir un bon compromis entre le refroidissement de l'air chaud et les perturbations du flux aérodynamique circulant dans le conduit.

3. Nacelle d'aéronef selon la revendication 1 ou 2, **caractérisée en ce que** l'élément disposé à l'intérieur au niveau de la zone de jonction comprend un pan incliné entre la zone au niveau de laquelle la surface extérieure dudit élément est plaquée contre la surface intérieure de l'autre élément et la zone au niveau de laquelle la surface extérieure dudit élément forme la surface extérieure de la nacelle, ledit pan incliné permettant d'orienter le flux d'air chaud selon une direction non parallèle à la surface extérieure de la nacelle.

4. Nacelle d'aéronef selon l'une quelconque des revendications 1 à 3, **caractérisée en ce que** la seconde partie (60, 72, 90) comprend une forme en biseau de manière à obtenir un chant (66, 76, 92) dont la surface est disposée au niveau de la surface aérodynamique des panneaux (54, 56).

5. Nacelle d'aéronef selon l'une quelconque des revendications 1 à 4, **caractérisée en ce que** les moyens (50) d'évacuation comprennent une cale (52) avec des plots (62) prévus au niveau d'au moins une des faces de ladite cale, constituant des éléments en saillie autorisant le passage de l'air depuis l'intérieur vers l'extérieur.

6. Nacelle d'aéronef selon l'une quelconque des revendications 1 à 4, **caractérisée en ce que** les moyens (50) d'évacuation comprennent une cale (52) avec au moins une rainure (68, 96) sur au moins l'une de ses faces permettant le passage de l'air depuis l'intérieur de la nacelle vers l'extérieur.

7. Nacelle d'aéronef selon la revendication 6, **caractérisée en ce que** les rainures (68,96) débouchent d'une part au niveau d'un premier chant (80, 98) via des orifices (82, 100) qui communiquent avec l'intérieur de la nacelle, et d'autre part, au niveau d'un second chant (76, 92) via des orifices (84, 102) qui communiquent avec l'extérieur de la nacelle.

8. Nacelle d'aéronef selon la revendication 6 ou 7, **caractérisée en ce que** la cale (52) comprend un épaulement (86), de hauteur sensiblement égale à l'épaisseur d'un premier panneau (54), qui délimite une première partie (88) sous forme d'une plaque de faible épaisseur intercalée entre les deux panneaux (54, 56), s'étendant au moins sur la longueur de la zone de superposition desdits panneaux (54, 56), et une seconde partie (90) en forme de biseau avec un chant (92) dont la surface est disposée au niveau de la surface aérodynamique desdits panneaux (54, 56) et un pan incliné (94) contre lequel est plaqué le second panneau (56) et **en ce que** la cale (52) comprend des rainures (96) seulement au niveau de la face en regard du premier panneau (54).

9. Nacelle d'aéronef comprenant un conduit intérieur (32), une surface extérieure (34), une lèvre (36) à l'avant reliant ledit conduit intérieur (32) et ladite surface extérieure (34) délimitant une entrée d'air, un cadre avant (38) reliant ladite surface extérieure (34) et ledit conduit intérieur (32), et supportant ladite lèvre (36), un système de dégivrage utilisant de l'air chaud insufflé à l'intérieur de ladite lèvre (36), et des moyens (50) d'évacuation de l'air chaud selon l'une quelconque des revendications précédentes, intercalés entre le panneau (56) formant le conduit intérieur (32) et le panneau (54) formant la lèvre (36).

## Claims

1. Aircraft nacelle that comprises discharge means (50) that make it possible to link the inside with the outside of the nacelle and a junction zone between two elements (54, 56) at the level of which the two elements are superposed, whereby the two elements each have a surface that forms the outside surface of the nacelle on both sides of the junction zone, **characterized in that** said discharge means (50) comprise a two-part block (52), a first part (58, 70, 88) that is inserted between the superposed panels and that comprises at least one projecting and/or hollow element that makes it possible to provide a passage between said panels so as to link the inside and the outside of the nacelle, and a second part (60, 72, 90) to the right of a single panel, the latter arranged inside at the level of the junction zone so as to protect it from an excessive temperature.

2. Aircraft nacelle according to claim 1, wherein the direction of the flow of ejected hot air forms an angle with the outside surface that varies from 5 to 30°, optimized for achieving a good compromise between the cooling of the hot air and the disturbances of the aerodynamic flow that circulates in the pipe.

3. Aircraft nacelle according to claim 1 or 2, wherein the element that is arranged inside at the level of the junction zone comprises an inclined face between the zone at which the outside surface of said element is flattened against the inside surface of the other element and the zone at which the outside surface of said element forms the outside surface of the nacelle, whereby said inclined face makes it possible to orient the flow of hot air in a direction that is not parallel to the outside surface of the nacelle.

4. Aircraft nacelle according to any of claims 1 to 3, wherein the second part (60, 72, 90) comprises a beveled shape so as to obtain an edge (66, 76, 92) whose surface is arranged at the aerodynamic surface of the panels (54, 56).

5. Aircraft nacelle according to any of claims 1 to 4, wherein the discharge means (50) comprise a block (52) with pins (62) that are provided at at least one of the surfaces of said block, constituting projecting elements that allow the passage of air from the inside to the outside.

6. Aircraft nacelle according to any of claims 1 to 4, wherein the discharge means (50) comprise a block (52) with at least one groove (68, 96) on at least one of its surfaces making possible the passage of air from the inside of the nacelle toward the outside.

7. Aircraft nacelle according to claim 6, wherein the grooves (68, 96) emerge, on the one hand, at a first edge (80, 98) via ports (82, 100) that communicate with the inside of the nacelle, and, on the other hand, at a second edge (76, 92) via ports (84, 102) that communicate with the outside of the nacelle.

8. Aircraft nacelle according to claim 6 or 7, wherein the block (52) comprises a shoulder (86) of a height that is approximately equal to the thickness of a first panel (54), which delimits a first part (88) in the form of a plate of small thickness that is inserted between the two panels (54, 56), extending at least over the length of the superposition zone of said panels (54, 56), and a second beveled-shape part (90) with an edge (92) whose surface is arranged at the aerodynamic surfaces of said panels (54, 56) and an inclined face (94) against which the second panel (56) is flattened, and wherein the block (52) comprises grooves (96) only at the surface opposite the first panel (54).

9. Aircraft nacelle that comprises an inside pipe (32), an outside surface (34), a front lip (36) that connects said inside pipe (32) and said outside surface (34) delimiting an air intake, a front frame (38) that connects said outside surface (34) and said inside pipe (32) and that supports said lip (36), a de-icing system that uses hot air that is blown inside said lip (36), and means (50) for discharging hot air according to any of the preceding claims, inserted between the panel (56) that forms the inside pipe (32) and the panel (54) that forms the lip (36).

## Patentansprüche

1. Gondel eines Flugzeugs umfassend Ableitmittel (50), die ermöglichen, das Innere mit dem Äußeren der Gondel zu verbinden, sowie einen Verbindungsbereich zwischen zwei Elementen (54, 56), in dem sich die beiden Elemente überdecken, wobei die beiden Elemente jeweils eine Fläche aufweisen, die die Außenseite der Gondel auf beiden Seiten des Verbindungsbereiches bildet, **dadurch gekennzeichnet, dass** die Ableitmittel (50) eine Abstützung (52) aus zwei Teilen umfassen, einem zwischen den übereinander liegenden Paneelen angeordneten ersten Teil (58, 70, 88), der wenigstens ein vorspringendes und/oder hohles Element umfasst, das ermöglicht, einen Durchgang zwischen den Paneelen auszubilden, um das Innere und das Äußere der Gondel miteinander zu verbinden, und einem zweiten Teil (60, 72, 90) gegenüber einem einzigen Paneel, demjenigen, das in Höhe des Verbindungsbereichs innen angeordnet ist, um es vor einer übermäßigen Temperatur zu schützen.

2. Gondel eines Flugzeugs nach Anspruch 1, **dadurch gekennzeichnet, dass** die Richtung des ausgestoßenen Heißluftstroms mit der Außenseite einen zwischen 5 und 30° variierenden Winkel einschließt, der optimiert ist, um einen guten Kompromiss zwischen dem Kühlen der Heißluft und den Störungen des in dem Kanal zirkulierenden aerodynamischen Stroms zu erhalten.

3. Gondel eines Flugzeugs nach Anspruch 1 oder 2, **dadurch gekennzeichnet, dass** das in Höhe des Verbindungsbereichs innen angeordnete Element eine geneigte Fläche zwischen dem Bereich, in dem die Außenseite des Elements gegen die Innenseite des anderen Elements gedrückt ist, und dem Bereich, in dem die Außenseite des Elements die Außenseite der Gondel bildet, wobei die geneigte Fläche ermöglicht, den Heißluftstrom in einer zur Außenseite der Gondel nicht parallelen Richtung auszurichten.

4. Gondel eines Flugzeugs nach einem der Ansprüche 1 bis 3, **dadurch gekennzeichnet, dass** das zweite Teil (60, 72, 90) eine abgeschrägte Form umfasst, um eine Kante (66, 76, 92) zu erhalten, deren Oberfläche im Bereich der aerodynamischen Fläche der Paneele (54, 56) angeordnet ist.

5. Gondel eines Flugzeugs nach einem der Ansprüche 1 bis 4, **dadurch gekennzeichnet, dass** die Ableitmittel (50) eine Abstützung (52) mit im Bereich wenigstens einer der Seiten der Abstützung vorgesehenen Kontaktpunkten (62) umfassen, die vorspringende Elemente bilden, welche den Durchgang der Luft von innen nach außen zulassen.

6. Gondel eines Flugzeugs nach einem der Ansprüche 1 bis 4, **dadurch gekennzeichnet, dass** die Ableitmittel (50) eine Abstützung (52) mit wenigstens einer Nut (68, 96) an wenigstens einer ihrer Seiten umfassen, die den Durchgang der Luft vom Inneren der Gondel zur Außenseite ermöglicht.

7. Gondel eines Flugzeugs nach Anspruch 6, **dadurch gekennzeichnet, dass** die Nuten (68, 96) einerseits im Bereich einer ersten Kante (80, 98) über Öffnungen (82, 100) ausmünden, die mit dem Inneren der Gondel in Verbindung stehen, und andererseits im Bereich einer zweiten Kante (76, 92) über Öffnungen (84, 102) ausmünden, die mit der Außenseite der Gondel in Verbindung stehen.

8. Gondel eines Flugzeugs nach Anspruch 6 oder 7, **dadurch gekennzeichnet, dass** die Abstützung (52) eine Schulter (86) mit einer Höhe, die im Wesentlichen gleich der Dicke eines ersten Paneels (54) ist, umfasst, welche einen ersten Teil (88) in Form einer zwischen den beiden Paneelen (54, 56) eingefügten, sich wenigstens über die Länge des Überlappungsbereichs der Paneele (54, 56) erstreckenden Platte geringer Dicke, sowie einen zweiten Teil (90) in Form einer Schräge mit einer Kante (92), deren Oberfläche im Bereich der aerodynamischen Fläche der Paneele (54, 56) angeordnet ist, und einer geneigten Fläche (94), gegen die das zweite Paneel (56) gedrückt ist, abgrenzt und dass die Abstützung (52) Nuten (96) lediglich im Bereich der dem ersten Paneel (54) gegenüber liegenden Seite aufweist.

9. Gondel eines Flugzeugs umfassend einen Innenkanal (32), eine Außenseite (34), eine Lippe (36) am vorderen Teil, die den Innenkanal (32) und die Außenseite (34) verbindet und einen Lufteinlass umgrenzt, einen vorderen Rahmen (38), der die Außenseite (34) und den Innenkanal (32) verbindet und die Lippe (36) trägt, ein Enteisungssystem, das in das Innere der Lippe (36) eingeblasene Heißluft verwendet, und Mittel (50) zum Ableiten der Heißluft nach einem der vorstehenden Ansprüche, die zwischen dem den Innenkanal (32) bildenden Paneel (56) und dem die Lippe (36) bildenden Paneel (54) eingefügt sind.
